(19) Europäisches Patentamt
European Patent Office
Office européen des brevets

(11) **EP 3 423 882 B1**

(12) **FASCICULE DE BREVET EUROPEEN**

(45) Date de publication et mention
de la délivrance du brevet:
**11.11.2020 Bulletin 2020/46**

(21) Numéro de dépôt: **17709408.3**

(22) Date de dépôt: **03.03.2017**

(51) Int Cl.:
***G02B 21/16*** *(2006.01)*

(86) Numéro de dépôt international:
**PCT/EP2017/055058**

(87) Numéro de publication internationale:
**WO 2017/149142 (08.09.2017 Gazette 2017/36)**

(54) **MISCROSCOPIE OPTIQUE NON-LINÉAIRE QUANTITATIVE**

QUANTITATIVES NICHTLINEARES OPTISCHES MIKROSKOP

QUANTITATIVE NON-LINEAR OPTICAL MICROSCOPE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.03.2016 FR 1651850**

(43) Date de publication de la demande:
**09.01.2019 Bulletin 2019/02**

(73) Titulaires:
• **Centre National de la Recherche Scientifique
75794 Paris Cedex 16 (FR)**
• **Ecole Polytechnique
91128 Palaiseau Cedex (FR)**

(72) Inventeurs:
• **BEAUREPAIRE, Emmanuel
91120 Palaiseau (FR)**
• **MAHOU, Pierre
91300 Massy (FR)**
• **SCHANNE-KLEIN, Maire-Claire
91370 Verrières-le-Buisson (FR)**
• **VUILLEMIN, Nelly
Verdun, QC, H4G 3A4 (CA)**
• **SUPATTO, Willy
91190 Gif-sur-Yvette (FR)**

(74) Mandataire: **Nony
11 rue Saint-Georges
75009 Paris (FR)**

(56) Documents cités:
**CN-A- 102 818 796      CN-A- 105 182 523
FR-A1- 2 984 531        JP-A- 2015 004 736
US-A1- 2011 174 986     US-A1- 2013 083 322
US-B1- 6 476 910**

**Description**

La présente invention se rapporte à un microscope optique non-linéaire ou multiphoton et à un procédé de microscopie optique non-linéaire ou multiphoton correspondant. Elle trouve une application particulièrement intéressante, mais non limitative, dans l'imagerie du collagène, notamment dans des échantillons histologiques.

D'une façon générale, la résolution des images en microscopie optique non-linéaire est liée au carré ou au cube de la distribution de l'intensité excitatrice. Les microscopes optiques non-linéaires usuels utilisent un profil d'excitation de type Gaussien qui est la distribution naturelle obtenue avec un faisceau laser non mis en forme (profil d'intensité gaussien et phase plate à l'entrée de l'objectif de focalisation). La résolution est alors de 300-400 nm dans la direction latérale et de 1-3 $\mu$m dans la direction axiale, dans des conditions d'excitation et de détection usuelles (ouverture numérique proche de 1, longueur d'onde d'excitation proche de 1 $\mu$m). Cette bonne résolution axiale est équivalente à une faible profondeur de champ et ne permet pas d'imager en une seule fois une coupe mince de tissu dont l'épaisseur est de quelques microns (2-7 $\mu$m typiquement).

Ceci est d'autant plus critique que le champ imagé est grand. En effet, il est souvent essentiel, notamment en histologie, d'imager de grandes zones d'intérêt (typiquement centimétriques) en déplaçant l'échantillon et en reconstituant une mosaïque d'images. La zone imagée doit alors rester plane et horizontale à l'échelle de cette résolution axiale de quelques microns pour que la coupe soit imagée correctement. Ceci n'est en pratique jamais le cas. En effet, les lames de microscope ne sont pas planes à cette échelle. Les coupes ne sont jamais parfaitement étalées. Enfin, il est très difficile d'aligner la lame parallèlement au plan focal à quelques microns près sur des distances de l'ordre du centimètre.

On connaît par ailleurs dans la littérature des publications enseignant l'utilisation de faisceaux de Bessel pour étendre la profondeur de champ tout en maintenant une bonne résolution latérale d'un faisceau d'excitation. Parmi ces publications, on distingue:

- Two-photon excitation fluorescence microscopy with a high depth of field using an axicon; Pascal Dufour et al., Applied Optics/vol. 45, No. 36/20 décembre 2006;
- Scanning two photon fluorescence microscopy with extended depth of field; E. J. Botcherby et al., Optics Communications 268 (2006) 253-260;
- Rapid three-dimensional isotropic imaging of living cells using Bessel beam plane illumination; Thomas A Planchon et al., Nature Methods/vol.8 No.5/May 2011; et
- Two-photon microscopy with simultaneous standard and extended depth offield using a tunable acoustic gradient-index lens; Nicolas Olivier et al., Optics Letters/vol.34, No.11/1er juin 2009.

La publication FR 2 984 531 A1 divulgue un microscope selon le préambule de la revendication 1. Les publications CN 105182523 A, JP 2015-4736 et CN 102818796 A divulguent des microscopes selon l'art antérieur.

La présente invention a pour but la réalisation d'imagerie de bonne résolution latérale notamment sur des lames ne présentant pas une parfaite planéité et horizontalité. Un autre but de l'invention est de proposer un système d'imagerie de grande sensibilité et spécificité. La présente invention a encore pour but un système d'imagerie capable d'acquérir rapidement des grandes zones d'intérêt.

À cette fin, l'invention propose un microscope optique non-linéaire, comprenant :

- une source de faisceau laser excitateur d'un échantillon à tester, du type de Bessel,
- un détecteur des signaux cohérents émis en transmission par l'échantillon à tester, en réponse à l'excitation par le faisceau laser excitateur, et
- un filtre disposé entre l'échantillon à tester et le détecteur, pour empêcher le détecteur de détecter les signaux émis en transmission par l'échantillon à tester, s'étendant au voisinage de l'axe optique du microscope.

Ainsi, avantageusement, le microscope selon l'invention met en œuvre un faisceau excitateur étendu axialement et confiné dans une ou deux directions latérales après focalisation. Un tel faisceau permet d'obtenir une profondeur de champs étendue des observations réalisées.

Ensuite, par rapport à la fluorescence par exemple, la génération d'harmoniques avec une excitation par un faisceau du type de Bessel intervient de manière cohérente sur l'étendue du faisceau excitateur, de telle sorte que de larges signaux SHG peuvent être observés à partir d'objets de large étendue axiale, malgré une intensité d'excitation qui peut être réduite. Ainsi, les propriétés de profondeur de champ étendue des faisceaux du type de Bessel peuvent être utilisées pour tester rapidement des propriétés non-linéaires d'échantillons épais en utilisant des signaux cohérents.

En outre, en ne détectant que les émissions hors axe, c'est-à-dire s'étendant avec un angle relativement grand par rapport à l'axe optique du microscope, on réalise une imagerie quantitative. En effet, les émissions SHG hors axe sont directement proportionnelles au carré du nombre de molécules d'intérêt, par exemple le nombre de molécules de collagène ayant une orientation parallèle au plan focal. Ainsi, les signaux émis ont une relation simple avec la densité de ces molécules, ce qui n'est pas le cas lorsqu'un faisceau excitateur du type de Gauss est mis en œuvre, et que des sommes de signaux émis à différentes profondeurs dans l'échantillon sont réalisées.

Enfin, en ne détectant que les émissions hors axe, on limite les effets liés à la longueur de cohérence réduite près de l'axe optique du microscope, qui peuvent provoquer des artéfacts d'intensité lumineuse dans les observations.

Selon des modes de réalisation préférés, le microscope optique non-linéaire selon l'invention présente une ou plusieurs des caractéristiques suivantes, prises seules ou en combinaison :

- la source de faisceau laser excitateur comprend :

  - un émetteur de faisceau laser pulsé, du type de Gauss,
  - un modulateur spatial de lumière pour moduler le profil spatial du faisceau laser pulsé, et
  - un premier objectif pour guider le faisceau modulé vers l'échantillon, l'objectif ayant de préférence une ouverture numérique supérieure à 0,5 ;

- le modulateur spatial de lumière comprend, de préférence consiste en un élément, choisi parmi :

  - un axicon,
  - un élément diffractif,
  - un modulateur à cristaux liquides,
  - une lentille liquide modulable, et
  - une lame de phase,

Combiné de préférence avec une optique de focalisation, notamment une lentille ;

- le filtre est adapté à bloquer les faisceaux émis par l'échantillon à tester correspondant à une ouverture numérique inférieure ou égale au tiers, de préférence aux deux-tiers, de l'ouverture numérique du faisceau excitateur ;
- le filtre est conformé pour bloquer les signaux cohérents émis par l'échantillon correspondant à une ouverture numérique inférieure à 0,1, de préférence inférieure à 0,2, et/ou supérieure à 0,8, de préférence supérieure à 0,9 ;
- le microscope comprend encore un condenseur ou un deuxième objectif, disposé entre l'échantillon à tester et le détecteur de signaux ;
- le microscope comprend une source de lumière blanche, le condenseur ou le deuxième objectif étant adapté à guider la lumière blanche vers l'échantillon à tester, et une caméra pour produire une image à partir de la lumière provenant de l'échantillon à tester, illuminé par la lumière blanche ;
- le premier objectif, d'une part, et le condenseur ou le deuxième objectif, d'autre part, sont disposés de part et d'autre de l'échantillon à tester ;
- la source de faisceau laser excitateur ou la source de faisceau laser pulsé, le cas échéant, a un taux de répétition supérieur à 10 MHz et/ou une puissance supérieure à 100 mW ;
- le faisceau laser excitateur ou pulsé, le cas échéant, est un train d'impulsions femtoseconde ;
- le microscope comprend en outre des moyens de balayage du faisceau laser excitateur sur l'échantillon à tester, notamment en ligne ou point par point; et
- le microscope comprend un support de lame adapté à recevoir l'échantillon à tester.

Selon un autre aspect, l'invention se rapporte à un scanner de lames ou système de pathologie digitale comprenant un microscope optique non-linéaire tel que décrit ci-avant dans toutes ses combinaisons, une platine, de préférence motorisée, sur laquelle l'échantillon peut être posé, et un enregistreur des images détectées par le détecteur des signaux cohérents.

Selon un autre aspect, il est proposé un procédé de microscopie optique non-linéaire, mis en œuvre dans un microscope ou un scanner de lames tels que décrits ci-avant dans toutes leurs combinaisons, comprenant les étapes consistant à :

- exciter avec un faisceau laser excitateur du type de Bessel, un échantillon à tester,
- filtrer les signaux cohérents émis en transmission par l'échantillon, au voisinage de l'axe optique du microscope optique, et
- détecter les signaux émis par l'échantillon ainsi filtrés.

Les signaux cohérents peuvent notamment être du type génération de second harmonique, génération de troisième harmonique, diffusion Raman anti-Stokes cohérents, diffusion Raman stimulée, mélanges à quatre ondes et somme de fréquences.

L'invention vise également un procédé de scan de lames d'échantillons histologiques, comprenant les étapes consistant à :

- balayer l'échantillon pour observer différents points ou lignes de l'échantillon en mettant en œuvre un procédé de microscopie non linéaire tel décrit ci-avant dans toutes ses combinaisons ; et
- remplacer l'échantillon à tester.

Le procédé selon l'invention peut notamment être mis en œuvre pour imager la présence de collagène, en particulier de collagène fibrillaire, ou de tout autre biopolymère capable d'émettre des signaux cohérents sous excitation laser, dans des échantillons histologiques, notamment des tissus prélevés.

D'autres caractéristiques et avantages de l'invention apparaîtront à la lecture de la description détaillée qui suit, laquelle description fait référence aux dessins ci-annexés parmi lesquels :

- la figure 1 représente schématiquement un exemple de scanner de lames ;
- les figures 2A-2C illustrent des exemples d'observations de tissus comprenant du collagène réalisées avec le scanner de lames de la figure 1 ;
- la figure 3 illustre la longueur de cohérence dans la direction de propagation hors axe dans le cas d'un faisceau incident de biais par rapport à l'axe optique d'un système optique ;
- la figure 4 illustre la longueur de cohérence dans la direction de l'axe optique d'un système optique, dans le cas d'un faisceau incident de biais par rapport à cet axe optique ; et
- la figure 5 est un ordinogramme d'un procédé de scan de lames histologiques pouvant être mis en œuvre dans le scanner de lames de la figure 1.

On rappelle tout d'abord quelques définitions.

Un faisceau gaussien est un faisceau laser dont l'évolution du profil transversal d'amplitude en fonction de la propagation spatiale est proportionnelle à une fonction gaussienne.

Un faisceau du type de Gauss est un faisceau laser dont une portion de l'évolution transversale d'amplitude en fonction de la propagation est proportionnelle à une fonction gaussienne.

Un faisceau de Bessel est un faisceau laser présentant une distribution d'intensité invariante le long de son axe de distribution. Un tel faisceau de Bessel, idéal, est défini par l'équation

$$E(r, z) = J_0\big(krsin(\beta)\big)exp\big(ikzcos(\beta)\big) \qquad [1]$$

où :

- $J_0$ est la fonction de Bessel de première espèce et d'ordre 0 ;
- $r$ est la distance à l'axe optique, dans un plan transverse ;
- $z$ est la distance de propagation le long de l'axe optique ;
- $k$ est le vecteur d'onde ;
- $\beta$ est l'angle entre l'axe optique et les vecteurs d'ondes formant le faisceau de Bessel.

Un tel faisceau de Bessel, idéal, peut théoriquement être obtenu en focalisant un anneau infiniment fin. Cependant, un tel faisceau idéal porte une quantité infinie d'énergie et ne peut donc pas être reproduit expérimentalement.

Un faisceau du type de Bessel est un faisceau laser présentant une distribution d'intensité invariante le long d'une portion, seulement, de son axe de distribution et portant une quantité d'énergie finie. Un tel faisceau du type de Bessel peut être obtenu, par exemple, en utilisant un générateur de phase tel qu'un modulateur spatial de lumière (de l'anglais « Spatial Light Modulator » ou SLM). On obtient une distribution d'intensité près de l'axe optique I(r, z) proportionnelle à :

$$I(r, z) \propto \frac{4\pi^2\beta^2 z}{\lambda} exp\left(\frac{-2z^2}{z_{max}^2}\right) J_0^2\left(\frac{2,4048\,r}{r_0}\right) \qquad [2]$$

où $r_0 = 2,4048 / (k \sin \beta)$ et $z_{max} = \omega_0 \cos \beta / \sin \beta$ correspondent à la largueur à mi-hauteur du maximum du pic latéral et du pic axial, respectivement, de la distribution d'intensité. Les extensions latérale $r_0$ et axiale $z_{max}$ peuvent être

contrôlées indépendamment l'une de l'autre par deux paramètres physiques, à savoir le rayon de col (ou rayon de pincement, en anglais « waist ») de l'onde incidente Gaussienne ou du type de Gauss, et la pente du modulateur spatial de lumière qui détermine l'angle β. Ainsi, la combinaison d'un élargisseur de faisceau et d'un modulateur spatial de lumière permet de programmer indépendamment l'extension latérale et axiale des faisceaux du type de Bessel focalisés, via la commande de la taille du faisceau incident illuminant le modulateur spatial de lumière et l'angle de propagation du cône de lumière transmis par le modulateur spatial. La profondeur de champ d'un microscope mettant en œuvre un tel type de faisceau excitateur peut ainsi être accrue sans incidence dommageable sur la résolution latérale du microscope.

La présente invention se réfère explicitement aux publications suivantes qui fournissent des informations plus détaillées relatives à l'élaboration d'un faisceau du type de Bessel :

- Principles of nanooptics, L. Novotny et B. Hecht, Cambridge Univ Press, 2006, en particulier les chapitres 1 à 5 pour la mise en forme spatiale de faisceaux ;
- Two-photon excitation fluorescence microscopy with a high depth offield using an axicon; Pascal Dufour et al., Applied Optics/vol. 45, No. 36/ 20 décembre 2006; cette publication enseigne l'utilisation d'un axicon ;
- Scanning two photon fluorescence microscopy with extended depth of field; E. J. Botcherby et al., Optics Communications 268 (2006) 253-260; on utilise un élément diffractifpour avoir une illumination annulaire et générer un faisceau du type de Bessel ;
- Rapid three-dimensional isotropic imaging of living cells using Bessel beam plane illumination; Thomas A Planchon et al., Nature Methods/vol.8 No.5/May 2011; on utilise ici une géométrie orthogonale ; et
- Two-photon microscopy with simultaneous standard and extended depth of field using a tunable acoustic gradient-index lens; Nicolas Olivier et al., Optics Letters/vol.34, No.11/june 1, 2009; on utilise dans cette publication une lentille acousto-optique.

Enfin, l'ouverture numérique est une caractéristique d'un système optique, généralement notée O.N., et définie par O. N. = $n_0 \times \sin(i_0)$, où no est l'indice de réfraction dans le milieu d'observation, et io est l'angle entre l'axe optique et le rayon le plus écarté de l'axe optique qui entre dans le système optique. Cet angle est appelé demi-angle d'ouverture.

Par extension, on appelle ouverture numérique d'un faisceau laser, la valeur $n_0 \times \sin(\beta)$, où β est l'angle au sommet du faisceau laser et $n_0$ l'indice de réfraction dans le milieu d'observation.

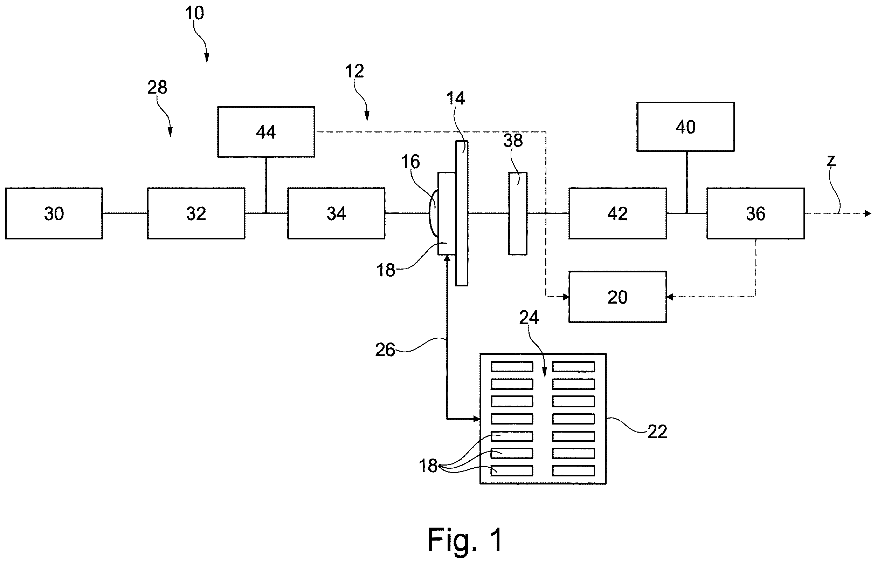

La figure 1 illustre un exemple de scanner de lames 10 ou système de pathologie digitale. Le scanner de lames 10 comporte essentiellement un microscope 12 optique non-linéaire, une platine 14, de préférence motorisée, pour recevoir un échantillon 16 à tester, fixé à une lame 18, et une unité de traitement 20 capables d'enregistre des images détectées par le microscope 12. La platine 14 peut comporter un support de lame adapté à recevoir l'échantillon à tester. Le support de lame peut notamment recevoir une lame sur laquelle est fixée l'échantillon à tester 16. L'échantillon 16 peut par exemple être une lame histologique d'un tissu de cellule, dans lequel on recherche la présence de collagène, notamment de collagène fibrillaire, ou de tout autre biopolymère capable d'émettre des signaux cohérents lorsqu'il est excité au moyen d'un laser.

Le scanner de lames 10 tel qu'illustré comporte également un chargeur de lames 22 pour pouvoir scanner successivement plusieurs lames 18. Le chargeur de lames 22 peut alors comprendre un logement 24 de réception de différentes lames 18 à tester et un moyen 26 de charger/décharger automatiquement les lames 18 depuis le logement 24 jusque sur la platine 14. Le moyen 26 de charger/décharger les lames 18 peut notamment comprendre un bras mobile et/ou un poussoir motorisé. Le logement 24 peut, de manière non limitative, être dimensionné pour recevoir au moins 100 lames distinctes, de préférence au moins 200 lames distinctes, de préférence encore au moins 400 lames 8 distinctes, un échantillon 16 différent étant monté sur chacune d'elles.

Le microscope 12, telle qu'illustré, comporte une source 28 de faisceau laser excitateur de l'échantillon à tester 16, posé sur la lame 18 reçue sur la platine 14. Cette source 28 de faisceau laser excitateur comprend, telle qu'illustrée, un émetteur 30 de faisceau laser pulsé, par exemple un faisceau laser pulsé femtoseconde. L'émetteur 30 est par exemple adapté à émettre un faisceau du type gaussien. Cet émetteur 30 peut être ajustable, notamment en intensité ou temporellement (largeur spectrale, durée, cadence et phase spectrale des impulsions, ...). À titre d'exemple, l'émetteur 30 peut délivrer un faisceau laser pulsé d'impulsions d'environ 100 fs, et/ou avec un taux de répétition de 100 MHz et/ou d'une puissance moyenne de quelques centaines de milliwatts, notamment supérieure à 100 mW.

Le faisceau laser pulsé émis par l'émetteur 30 est mis en forme spatialement par un modulateur spatial de lumière 32. Ce modulateur 32 peut comprendre ou, mieux, être constitué d'un élément choisi parmi un axicon ou une lentille conique, un élément diffractif, un modulateur à cristaux liquides, une lentille liquide modulable ou acoustique, une lame de phase ou tout autre modulateur spatial de lumière capable d'opérer une mise en forme de type de Bessel, l'élément étant de préférence combiné à une optique de focalisation, notamment une lentille. Le faisceau présente ainsi à l'entrée d'un objectif 34 une distribution d'intensité moyenne sous la forme d'un ou plusieurs anneaux concentriques. Un ou plusieurs anneaux de lumière sont ainsi formés sur la pupille arrière de l'objectif 34. Le faisceau du type de Bessel est ensuite focalisé sur l'échantillon 16 posé sur la lame 18. Ce faisceau du type de Bessel est à profondeur de champ étendue permettant ainsi d'imager toute l'épaisseur d'un échantillon histologique d'une épaisseur de l'ordre de 2 $\mu$m à 25 $\mu$m. il n'est donc plus nécessaire, a priori, de réaliser plusieurs observations à différentes profondeurs dans l'épaisseur de l'échantillon, ce qui permet un gain de temps appréciable pour scanner une lame histologique. Il a été constaté par exemple qu'un faisceau de Bessel fortement focalisé, avec une ouverture numérique supérieure à 0,5 notamment, par exemple égale à 1,05, permet une résolution latérale satisfaisante, et une profondeur de champ supérieure à l'épaisseur d'une coupe histologique, ce qui permet de pallier tout défaut de planéité.

En réponse à cette excitation, l'échantillon 16 émet en transmission - c'est-à-dire dans la direction opposée à la source 28 - des signaux cohérents non-linéaires, qui sont captés par un détecteur 36.

Ces signaux cohérents non-linéaires peuvent notamment être des signaux de génération de second harmonique (de l'anglais « second-harmonic generation », ou SHG). En variante, il s'agit de signaux du type génération de troisième harmonique (de l'anglais « third-harmonic generation » ou THG), diffusion Raman anti-Stokes cohérents (CARS), diffusion Raman stimulée (SRS), mélanges à quatre ondes (FWM) et somme de fréquences. Le faisceau laser d'excitation de l'échantillon - donc la source laser ou l'émetteur laser - est ainsi à choisir en fonction du type de signaux émis par l'échantillon, que l'on souhaite détecter.

Cependant, tel qu'illustré à la figure 1, un filtre 38 est disposé entre l'échantillon 16 et le détecteur 36. Ce filtre 38 est adapté à bloquer les signaux émis en transmission par l'échantillon 16, qui s'étendent au voisinage de l'axe optique Z du microscope 12, de telle sorte que ces signaux ne sont pas détectés par le détecteur 36. Notamment, le filtre 38 peut être adapté à bloquer les faisceaux émis par l'échantillon 16 formant un angle avec l'axe optique Z correspondant à une ouverture numérique inférieure ou égale au tiers de l'ouverture numérique du faisceau du type de Bessel focalisé sur l'échantillon, mieux, inférieure ou égale aux deux tiers de l'ouverture numérique du faisceau du type de Bessel. Le filtre 38 peut par exemple être adapté à bloquer les faisceaux émis en transmission par l'échantillon, correspondant à une ouverture numérique inférieure à 0,1. De préférence, le filtre 38 est adapté à bloquer les faisceaux émis en transmission par l'échantillon, correspondant à une ouverture numérique inférieure à 0,3.

Le filtre 30 peut par exemple être un filtre annulaire, empêchant alors également la détection des signaux émis en transmission par l'échantillon 16, qui s'étendent trop loin de l'axe optique Z du microscope 12.

Le filtre 38 présente ainsi, avantageusement, une ouverture numérique sensiblement égale à l'ouverture numérique de l'objectif 34 et/ou au faisceau excitateur du type de Bessel focalisé au niveau de l'échantillon à tester. En d'autres termes, le filtre 38 est également adapté à bloquer les faisceaux émis par l'échantillon correspondant à une ouverture numérique supérieure à l'ouverture numérique du faisceau excitateur, notamment supérieure à 1,05.

Le scanner de lames 10 comprend encore, tel qu'illustré, une source de lumière blanche 40 éclairant un condenseur 42 ou un deuxième objectif. Cette lumière blanche est ensuite guidée vers l'échantillon 16 à travers la lame 18. Une caméra 44, ici une caméra numérique, permet de capter des images numériques de l'échantillon 16 à partir de la lumière blanche provenant de l'échantillon 16.

L'unité de traitement 20 est équipée de moyens logiciels et matériels nécessaires et connus de l'homme ou de la femme du métier pour piloter différents composants du scanner de lames 10, traiter les images numériques de la caméra numérique 44 et les signaux provenant du détecteur 36, et reconstituer et/ou afficher des images sur un écran, correspondant aux différentes observations successives d'un même échantillon balayé.

L'acquisition d'une telle image est obtenue par balayage de la platine motorisée 14 par rapport à la source de faisceau laser excitateur 28. Ce balayage peut notamment être réalisé par ligne ou point par point. Des moyens de balayage (non représentés), notamment des moyens de balayage par ligne ou point par point, peuvent être prévus, qui permettent de balayer latéralement l'échantillon 16 avec le faisceau du type de Bessel sortant du modulateur spatial de lumière 32. Ces moyens de balayage peuvent comprendre par exemple des scanners à miroir résonnants ou non résonnants et/ou des éléments acousto-optiques entre le modulateur 32 et l'objectif 34. Ils sont avantageusement commandés en combinaison avec la commande de balayage de la platine motorisée 14 pour permettre d'imager l'intégralité de l'échantillon à tester.

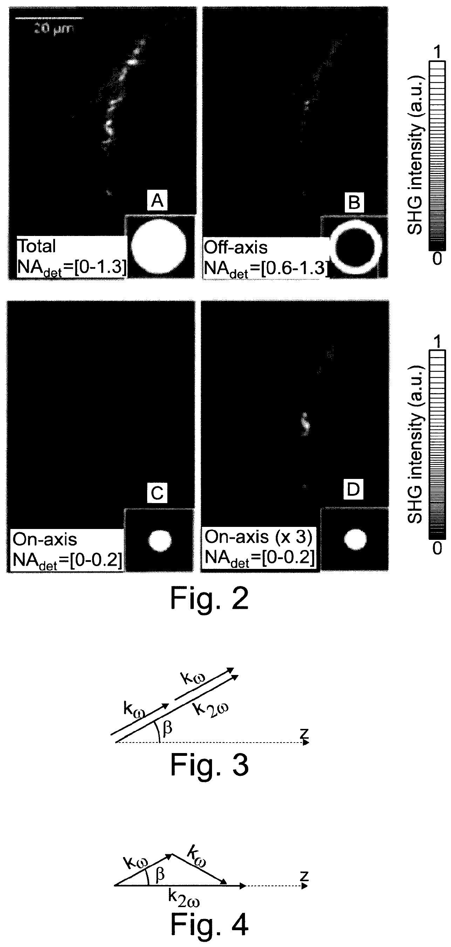

À titre d'exemple, on a représenté sur la figure 2, des exemples d'observations réalisées avec le scanner de lames 10 de la figure 1. Ces observations correspondant à la présence des fibres de collagène dans un tissu fibrosé de rein de souris, imagé avec un faisceau du type de Bessel de longueur d'onde 800 nm, une ouverture numérique du faisceau du type de Bessel de 1,05 et un objectif de grossissement 25x. Le signal émis par l'échantillon a été successivement enregistré avec les filtrages angulaires suivants :

- Figure 2A : pas de filtrage angulaire, ouverture numérique du faisceau détecté de 0 à 1,2 ;
- Figure 2B : filtrage des émissions proches de l'axe optique du système à l'aide d'un masque, avec une ouverture numérique du faisceau détecté supérieure à 0,6 et inférieure à 1,2 ;
- Figure 2C : enregistrement des émissions proches de l'axe optique uniquement avec filtrage à l'aide d'un diaphragme, avec une ouverture numérique du faisceau détecté comprise entre 0 à 0,2 ;
- Figure 2D : enregistrement des émissions proches de l'axe optique uniquement, avec filtrage à l'aide d'un diaphrag-

6

me, l'ouverture numérique du faisceau détecté étant comprise entre 0 à 0,2, le temps d'acquisition étant triplé par rapport à la figure 2C.

Le filtrage spatial des émissions a été calibré en mesurant la transmission de faisceaux de type de Bessel d'ouvertures numériques connues. Les images correspondent aux émissions SHG du collagène fibrillaire dans les échantillons histologiques de rein fibrosé de souris. Les émissions SHG suite à une excitation par faisceau du type de Bessel sont majoritairement obtenues à distance de l'axe optique du microscope. La détection des signaux SHG émis près de l'axe optique et éloignés de l'axe optique donne des résultats qualitativement équivalents, mais avec des contrastes différents. Notamment, la détection des signaux émis au voisinage de l'axe optique présente des points qui semblent correspondre à une importante concentration de collagène fibrillaire. Ces points ne se retrouvent pas forcément dans l'image correspondant à la détection des émissions plus éloignées de l'axe optique.

En pratique, il semble que la détection des émissions éloignées de l'axe optique corresponde mieux à la réalité de l'échantillon testé.

En effet, les émissions SHG sont cohérentes. Le rendement des émissions et leur directivité dépendent à la fois de la structure de l'échantillon testé et de la distribution du champ d'excitation. Le rendement des émissions SHG dans une direction particulière est ainsi fonction du décalage des vecteurs d'ondes dans cette direction. Le décalage des vecteurs d'onde $\Delta\mathbf{K}_\beta$ entre le champ excitateur, de pulsation $\omega$, et le champ harmonique, de pulsation $2\omega$, émis dans une direction $\beta$ est donné par la projection géométrique $\mathbf{k}(2\omega)-2\mathbf{k}(\omega)$ le long de cette direction (cf. Figure 3). Si l'on considère le cas d'un milieu non dispersif (à fin de simplification) avec une excitation par un faisceau de Bessel d'ouverture numérique caractérisée par un angle $\beta$, l'émission SHG intervenant le long de cette direction $\beta$, présente un décalage des vecteurs d'ondes minimal. En d'autres termes, dans cette direction, la longueur de cohérence est maximale.

Au contraire, les émissions le long de l'axe optique sont caractérisées par une longueur de cohérence $L_c$ donnée par (cf. Figure 4) :

$$L_C = \pi/\Delta\mathbf{k}_\beta \approx \pi/(2k(1 - \cos\beta)) \qquad [3]$$

La détection des émissions SHG le long de l'axe optique ou au voisinage de l'axe optique fournit ainsi une image caractérisée par une longueur de cohérence inférieure à la longueur axiale du faisceau du type de Bessel, de telle sorte que cette image contient des artéfacts d'intensité liés à l'épaisseur locale et à la structure axiale de l'échantillon testé. L'observation correspondante est qualitativement pertinente, mais présente des défauts d'un point de vue quantitatif. Notamment il peut être observé des points présentant une surintensité lumineuse, correspondant à une surestimation de la présence de collagène.

La détection des émissions SHG plus éloignées de l'axe optique permet par contre d'obtenir une image avec une profondeur de champ étendue résultant de la superposition cohérente des contributions de tous les dipôles excités dans le volume testé. L'image obtenue est plus fiable quantitativement.

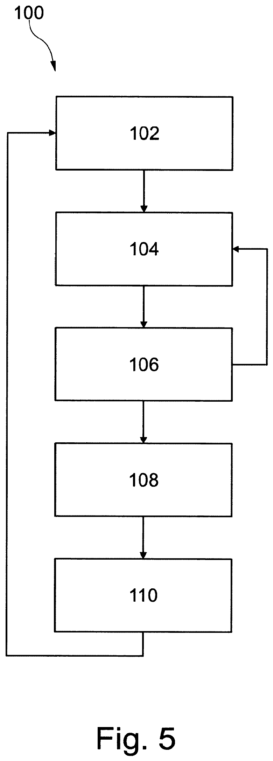

Le scanner de lames 10 permet de mettre en œuvre le procédé de scan de lames 100 représenté sous forme d'ordinogramme sur la figure 5.

Selon ce procédé, on place tout d'abord, au cours d'une étape 102, une lame 18 sur la platine 14, un échantillon à tester 16 étant déposé sur la lame. Cette opération peut être réalisée automatiquement à l'aide du moyen 26 de charge/décharge de lames.

Ensuite, dans un second temps 104, on excite avec un faisceau laser excitateur du type de Bessel, l'échantillon à tester 16, on filtre les signaux cohérents émis en transmission par l'échantillon 16, au voisinage de l'axe optique Z du microscope optique 12 utilisé et on détecte les signaux émis par l'échantillon 16, ainsi filtré.

De manière concomitante, des images de l'échantillon, éclairé sous lumière blanche, peuvent être enregistrées.

Ensuite, dans une étape 106, on déplace l'échantillon par rapport à la source de faisceau excitateur puis on revient à l'étape 104, ceci afin d'observer un autre point de l'échantillon 16. On procède ainsi jusqu'à avoir balayé tout l'échantillon 16.

On passe alors à l'étape 108 où l'unité de traitement assemble les observations successives réalisées sur un échantillon pour en obtenir une image.

Enfin, à l'étape 110, on retire l'échantillon testé, avant de retourner à l'étape 102 où un nouvel échantillon 16 à tester est placé sur la platine.

L'ordre des étapes 108 et 110 peut également être inversé. Ces étapes 108, 110 peuvent également être concomitantes. L'étape 108 peut également n'être réalisée qu'une fois que tous les échantillons 16 présents dans le chargeur de lames 22 ont été testés.

Bien entendu, il est également possible de ne procéder au scan que d'un seul échantillon donc d'une seule lame. Il peut encore être envisagé de ne scanner qu'une portion seulement d'un l'échantillon à tester ou de chaque échantillon à tester.

L'invention n'est pas limitée aux seuls exemples qui viennent d'être décrits et est susceptible de nombreuses variantes accessibles à l'homme ou à la femme de l'art.

Par exemple, des signaux non cohérents (2PEF, 3PEF) peuvent être détectés indifféremment dans une voie en réflexion ou en transmission en plus des émissions cohérentes en transmission. L'acquisition de signaux cohérents peut être combinée à l'acquisition des signaux 2PEF/3PEF pour compter les cellules, par exemple en utilisant un marqueur fluorescent couramment utilisé tel que le DAPI (DiAmidino-Phenyl-Indol), pour imager la morphologie du tissu testé ou pour visualiser d'autres molécules ou structures d'intérêt. Cette fluorescence peut résulter de marquages immunochimiques ou histologiques, de modifications génétiques (fusions de protéines fluorescentes) ou de chromophores endogènes. D'une manière générale, plusieurs signaux cohérents et incohérents peuvent être détectés simultanément pour localiser et quantifier simultanément diverses composantes d'intérêt du tissu, par exemple (i) la localisation et la quantification du collagène fibrillaire par SHG et du contenu lipidique par microscopie THG, CARS, SRS ou FWM, ou (ii) la localisation et la quantification du collagène fibrillaire par SHG et de certains types cellulaires par le signal 2PEF après un immunomarquage adéquat.

Le filtrage spatial peut également être mis en œuvre dans l'espace de Fourier.

## Revendications

1. Microscope (12) optique non-linéaire, comprenant :

   - une source (28) de faisceau laser excitateur d'un échantillon (16) à tester, du type de Bessel,
   - un détecteur (36) des signaux cohérents émis en transmission par l'échantillon (16) à tester, en réponse à l'excitation par le faisceau laser excitateur,
   **caractérise par**
   - un filtre (38) disposé entre l'échantillon à tester (16) et le détecteur (36), pour empêcher le détecteur (36) de détecter les signaux émis en transmission par l'échantillon (16) à tester, s'étendant au voisinage de l'axe optique (Z) du microscope (12).

2. Microscope selon la revendication 1, dans lequel la source de faisceau laser excitateur comprend :

   - un émetteur (30) de faisceau laser pulsé, du type de Gauss,
   - un modulateur spatial de lumière (32) pour moduler le profil spatial du faisceau laser pulsé, et
   - un premier objectif (34) pour guider le faisceau modulé vers l'échantillon (16), le premier objectif (34) ayant de préférence une ouverture numérique supérieure à 0,5.

3. Microscope selon la revendication 2, dans lequel le modulateur spatial de lumière (32) comprend, de préférence consiste en un élément, choisi parmi :

   - un axicon,
   - un élément diffractif,
   - un modulateur à cristaux liquides,
   - une lentille liquide modulable, et
   - une lame de phase,

   de préférence combiné avec une optique de focalisation, notamment une lentille.

4. Microscope selon l'une quelconque des revendications précédentes, dans lequel le filtre (38) est adapté à bloquer les faisceaux émis par l'échantillon (16) à tester correspondant à une ouverture numérique inférieure ou égale au tiers, de préférence aux deux-tiers, de l'ouverture numérique du faisceau excitateur.

5. Microscope selon l'une quelconque des revendications précédentes, dans lequel le filtre (38) est conformé pour bloquer les signaux cohérents émis par l'échantillon (16) correspondant à une ouverture numérique inférieure à 0,1, de préférence inférieure à 0,2, et/ou supérieure à 0,8, de préférence supérieure à 0,9.

6. Microscope selon l'une quelconque des revendications précédentes, comprenant encore un condenseur (42) ou un deuxième objectif, disposé entre l'échantillon à tester et le détecteur de signaux, comprenant de préférence une source de lumière blanche (40), le condenseur (42) ou le deuxième objectif étant adapté à guider la lumière blanche vers l'échantillon (16) à tester, et une caméra (44) pour produire une image à partir de la lumière provenant de l'échantillon (16) à tester, illuminé par la lumière blanche.

7. Microscope selon la revendication 2 en combinaison avec la revendication 6, dans lequel le premier objectif (34), d'une part, et le condenseur (42) ou le deuxième objectif, d'autre part, sont disposés de part et d'autre de l'échantillon (16) à tester.

8. Microscope selon l'une quelconque des revendications précédentes, dans lequel la source (28) de faisceau laser excitateur ou l'émetteur (30) de faisceau laser pulsé, le cas échéant, a un taux de répétition supérieur à 10 MHz et/ou une puissance supérieure à 100 mW.

9. Microscope selon l'une quelconque des revendications précédentes, dans lequel le faisceau laser excitateur ou pulsé, le cas échéant, est un train d'impulsions femtoseconde.

10. Microscope selon l'une quelconque des revendications précédentes, comprenant en outre des moyens de balayage du faisceau laser excitateur sur l'échantillon à tester, notamment en ligne ou point par point.

11. Microscope selon l'une quelconque des revendications précédentes, comprenant un support de lame adapté à recevoir l'échantillon à tester.

12. Scanner de lames (10) comprenant un microscope (12) optique non-linéaire selon l'une quelconque des revendications précédentes, une platine (14), de préférence motorisée, sur laquelle l'échantillon (16) peut être posé, et un enregistreur (20) des images détectées par le détecteur (36) des signaux cohérents.

13. Procédé de microscopie optique non-linéaire, mis en œuvre dans un microscope selon l'une quelconque des revendications 1 à 11 ou un scanner de lames selon la revendication 12, comprenant les étapes (104) consistant à :

    - exciter avec un faisceau laser excitateur du type de Bessel, un échantillon à tester,
    - filtrer les signaux cohérents émis en transmission par l'échantillon, au voisinage de l'axe optique du microscope optique, et
    - détecter les signaux émis par l'échantillon ainsi filtrés.

14. Procédé selon la revendication 13, dans lequel les signaux cohérents sont du type génération de second harmonique, génération de troisième harmonique, diffusion Raman anti-Stokes cohérents, diffusion Raman stimulée, mélanges à quatre ondes et somme de fréquences.

15. Procédé de scan de lames d'échantillons histologiques, comprenant les étapes consistant à :

    - balayer (106) l'échantillon (16) pour observer différents points ou lignes de l'échantillon (16) en mettant en œuvre un procédé de microscopie non linéaire selon la revendication 13 ou 14 ; et
    - remplacer (110, 102) l'échantillon à tester.

**Patentansprüche**

1. Nichtlineares optisches Mikroskop (12), das Folgendes umfasst:

    - eine Laserstrahlquelle (28), um eine zu prüfende Probe (16) zu erregen, des Bessel-Typs,
    - einen Detektor (36) für kohärente Signale, die von der zu prüfenden Probe (16) in Reaktion auf die Erregung durch den Erregungslaserstrahl im Durchlassbetrieb emittiert werden,
    **gekennzeichnet durch**
    - ein Filter (38), das zwischen der zu prüfenden Probe (16) und dem Detektor (36) angeordnet ist, um zu verhindern, dass der Detektor (36) Signale, die von der zu prüfenden Probe (16) im Durchlassbetrieb emittiert werden und in der Nähe der optischen Achse (Z) des Mikroskops (12) verlaufen, detektiert.

2. Mikroskop nach Anspruch 1, wobei die Erregungslaserstrahlenquelle Folgendes umfasst:

    - einen Emitter (30) für gepulste Laserstrahlen des Gauß-Typs,

- einen räumlichen Lichtmodulator (32), um das räumliche Profil des gepulsten Laserstrahls zu modulieren, und
- ein erstes Objektiv (34), um den modulierten Strahl zu der Probe (16) zu führen, wobei das erste Objektiv (34) vorzugsweise eine numerische Apparatur größer als 0,5 besitzt.

3. Mikroskop nach Anspruch 2, wobei der räumliche Lichtmodulator (32) ein Element umfasst und vorzugsweise aus einem solchen Element besteht, das gewählt ist aus:

- einem Axicon,
- einem Beugungselement,
- einem Flüssigkristallmodulator,
- einer modulierbaren Flüssigkeitslinse und
- einem Phasenplättchen

und vorzugsweise mit einer Fokussierungsoptik, insbesondere einer Linse, kombiniert ist.

4. Mikroskop nach einem der vorhergehenden Ansprüche, wobei das Filter (38) dafür ausgelegt ist, Strahlen, die von der zu prüfenden Probe (16) emittiert werden und einer numerischen Apparatur entsprechen, die kleiner oder gleich einem Drittel, vorzugsweise zwei Dritteln, der numerischen Apparatur des Erregungsstrahls ist, zu blockieren.

5. Mikroskop nach einem der vorhergehenden Ansprüche, wobei das Filter (38) dafür ausgelegt ist, die kohärenten Signale zu blockieren, die von der Probe (16) emittiert werden und einer numerischen Apparatur entsprechen, die kleiner als 0,1, vorzugsweise kleiner als 0,2 und/oder größer als 0,8, vorzugsweise größer als 0,9, ist.

6. Mikroskop nach einem der vorhergehenden Ansprüche, das außerdem einen Kondensor (42) oder ein zweites Objektiv, das zwischen der zu prüfenden Probe und dem Signaldetektor angeordnet ist und vorzugsweise eine Weißlichtquelle (40) aufweist, wobei der Kondensor (42) oder das zweite Objektiv dafür ausgelegt ist, das weiße Licht zu der zu prüfenden Probe (16) zu führen, und eine Kamera (44), um anhand des Lichts, das von der mit dem weißen Licht beleuchteten zu prüfenden Probe (16) stammt, ein Bild zu erzeugen, umfasst.

7. Mikroskop nach Anspruch 2 in Kombination mit Anspruch 6, wobei das erste Objektiv (34) einerseits und der Kondensor (42) oder das zweite Objektiv andererseits auf der einen bzw. der anderen Seite der zu prüfenden Probe (16) angeordnet sind.

8. Mikroskop nach einem der vorhergehenden Ansprüche, wobei die Erregungslaserstrahlenquelle (28) oder der Emitter (30) für gepulste Laserstrahlen gegebenenfalls eine Wiederholungsrate von mehr als 10 MHz und/oder eine Leistung von mehr als 100 mW besitzt.

9. Mikroskop nach einem der vorhergehenden Ansprüche, wobei der erregende oder gepulste Laserstrahl gegebenenfalls ein Zug von Femtosekunden-Impulsen ist.

10. Mikroskop nach einem der vorhergehenden Ansprüche, der außerdem Mittel umfasst, um die zu prüfende Probe mit dem Erregungslaserstrahl insbesondere längs einer Linie oder Punkt für Punkt zu überstreichen.

11. Mikroskop nach einem der vorhergehenden Ansprüche, das einen Objektträger aufweist, der dafür ausgelegt ist, die zu prüfende Probe aufzunehmen.

12. Objektträger-Scanner (10), der ein nichtlineares optisches Mikroskop (12) nach einem der vorhergehenden Ansprüche, eine vorzugsweise motorisch angetriebene Platine (14), auf die die Probe (16) gelegt werden kann, und eine Aufzeichnungseinrichtung (20) für Bilder, die von dem Detektor (36) für kohärente Signale detektiert werden, umfasst.

13. Verfahren für nichtlineares optisches Mikroskop, das in einem Mikroskop nach einem der Ansprüche 1 bis 11 oder in einem Objektträger-Scanner nach Anspruch 12 ausgeführt wird und die folgenden Schritte (104) umfasst:

- Erregen einer zu prüfenden Probe mit einem Erregungslaserstrahl des Bessel-Typs,
- Filtern der kohärenten Signale, die von der Probe im Durchlassbetrieb emittiert werden, in der Umgebung der optischen Achse des optischen Mikroskops und
- Detektieren der von der Probe emittierten Signale, die auf diese Weise gefiltert worden sind.

**14.** Verfahren nach Anspruch 13, wobei die kohärenten Signale vom Typ Erzeugung einer zweiten Harmonischen, Erzeugung einer dritten Harmonischen, kohärente Anti-Stokes-Raman-Streuung, stimulierte Raman-Streuung, Gemische mit vier Wellen und Frequenzsumme sind.

**15.** Verfahren zum Scannen von Objektträgern histologischer Proben, das die folgenden Schritte umfasst:

- Überstreichen (106) der Probe (16), um verschiedene Punkte oder Linien der Probe (16) zu beobachten, durch Ausführen eines Verfahrens für nichtlineares Mikroskop nach Anspruch 13 oder 14; und
- Austauschen (110, 102) der zu prüfenden Probe.

**Claims**

**1.** Non-linear optical microscope (12), comprising:

- an excitation laser beam source (28) for exciting a sample (16) to be tested, of the Bessel type,
- a detector (36) for detecting the coherent signals emitted in transmission by the sample (16) to be tested, in response to the excitation by the excitation laser beam,
**characterized by**
- a filter (38) arranged between the sample to be tested (16) and the detector (36), in order to prevent the detector (36) from detecting the signals emitted in transmission by the sample (16) to be tested, extending in the vicinity of the optical axis (Z) of the microscope (12).

**2.** Microscope according to Claim 1, wherein the excitation laser beam source comprises:

- a pulsed laser beam emitter (30), of the Gaussian type,
- a spatial light modulator (32) for modulating the spatial profile of the pulsed laser beam, and
- a first objective (34) for guiding the modulated beam to the sample (16), the first objective (34) preferably having a numerical aperture larger than 0.5.

**3.** Microscope according to Claim 2, wherein the spatial light modulator (32) comprises, preferably consists of, an element chosen from:

- an axicon,
- a diffractive element,
- a liquid-crystal modulator,
- a liquid lens that can be modulated, and
- a phase plate,

preferably combined with a focusing optic, in particular a lens.

**4.** Microscope according to any one of the preceding claims, wherein the filter (38) is suitable for blocking the beams emitted by the sample (16) to be tested corresponding to a numerical aperture that is smaller than or equal to a third, preferably two thirds, of the numerical aperture of the excitation beam.

**5.** Microscope according to one of the preceding claims, wherein the filter (38) is formed so as to block the coherent signals emitted by the sample (16) corresponding to a numerical aperture that is smaller than 0.1, preferably smaller than 0.2, and/or larger than 0.8, preferably larger than 0.9.

**6.** Microscope according to any one of the preceding claims, further comprising a condenser (42) or a second objective, arranged between the sample to be tested and the signal detector, preferably comprising a source of white light (40), the condenser (42) or the second objective being suitable for guiding the white light to the sample to be tested (16), and a camera (44) for producing an image from the light arising from the sample (16) to be tested, illuminated by the white light.

**7.** Microscope according to Claim 2 in combination with Claim 6, wherein the first objective (34), on the one hand, and the condenser (42) or the second objective, on the other hand, are arranged on either side of the sample (16) to be tested.

8. Microscope according to any one of the preceding claims, wherein the excitation laser beam source (28) or the pulsed laser beam emitter (30), as applicable, has a repetition rate higher than 10 MHz and/or a power higher than 100 mW.

9. Microscope according to any one of the preceding claims, wherein the pulsed or excitation laser beam, as applicable, is a femtosecond pulse train.

10. Microscope according to any one of the preceding claims, further comprising means for scanning the excitation laser beam over the sample to be tested, in particular by line or point-by-point scanning.

11. Microscope according to any one of the preceding claims, comprising a slide holder suitable for receiving the sample to be tested.

12. Slide scanner (10) comprising a non-linear optical microscope (12) according to any one of the preceding claims, a platform (14), which is preferably motorized, on which the sample (16) may be placed, and a recorder (20) for recording the images detected by the detector (36) for detecting the coherent signals.

13. Non-linear optical microscopy method, implemented in a microscope according to any one of Claims 1 to 11 or a slide scanner according to Claim 12, comprising the steps (104) consisting in:

   - using an excitation laser beam of the Bessel type to excite a sample to be tested,
   - filtering the coherent signals emitted in transmission by the sample, in the vicinity of the optical axis of the optical microscope, and
   - detecting the signals emitted by the sample that are filtered in this way.

14. Method according to Claim 13, wherein the coherent signals are of the type of second-harmonic generation, third-harmonic generation, coherent anti-Stokes Raman scattering, stimulated Raman scattering, four-wave mixing and sum-frequency generation.

15. Method for scanning slides of histological samples, comprising the steps consisting in:

   - scanning (106) the sample (16) in order to observe different points or lines of the sample (16) by implementing a non-linear microscopy method according to Claim 13 or 14; and
   - replacing (110, 102) the sample to be tested.

Fig. 1

Fig. 2

Fig. 3

Fig. 4

100

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2984531 A1
- CN 105182523 A
- JP 2015004736 A
- CN 102818796 A

**Littérature non-brevet citée dans la description**

- **PASCAL DUFOUR et al.** Two-photon excitation fluorescence microscopy with a high depth of field using an axicon. *Applied Optics,* 20 Décembre 2006, vol. 45 (36
- **E. J. BOTCHERBY et al.** Scanning two photon fluorescence microscopy with extended depth of field. *Optics Communications,* 2006, vol. 268, 253-260
- **THOMAS A PLANCHON et al.** Rapid three-dimensional isotropic imaging of living cells using Bessel beam plane illumination. *Nature Methods,* Mai 2011, vol. 8 (5
- **NICOLAS OLIVIER et al.** Two-photon microscopy with simultaneous standard and extended depth offield using a tunable acoustic gradient-index lens. *Optics Letters,* 01 Juin 2009, vol. 34 (11
- **L. NOVOTNY ; B. HECHT.** Principles of nanooptics. Cambridge Univ Press, 2006
- **PASCAL DUFOUR et al.** Two-photon excitation fluorescence microscopy with a high depth offield using an axicon. *Applied Optics,* 20 Décembre 2006, vol. 45 (36
- **NICOLAS OLIVIER et al.** Two-photon microscopy with simultaneous standard and extended depth of field using a tunable acoustic gradient-index lens. *Optics Letters,* 01 Juin 2009, vol. 34 (11